# EUROPEAN PATENT SPECIFICATION

(11) **EP 4 654 156 B1**
(45) Date of publication and mention of the grant of the patent: **01.07.2026**
(21) Application number: 24177779.6
(22) Date of filing: 23.05.2024
(51) Int. Cl.: G06V 10/94, G06V 10/778

(54) **PROVISION OF ANNOTATED TRAINING IMAGES FOR USE IN TRAINING OF A TRAINABLE IMAGE CONTENT RECOGNITION ALGORITHM OF A MACHINE VISION SYSTEM**
BEREITSTELLUNG VON ANNOTIERTEN TRAININGSBILDERN ZUR VERWENDUNG BEIM TRAINIEREN EINES LERNFÄHIGEN BILDINHALTSERKENNUNGSALGORITHMUS EINES MASCHINELLEN SICHTSYSTEMS
FOURNITURE D'IMAGES D'APPRENTISSAGE ANNOTÉES DESTINÉES À ÊTRE UTILISÉES DANS L'APPRENTISSAGE D'UN ALGORITHME DE RECONNAISSANCE DE CONTENU D'IMAGE POUVANT ÊTRE ENTRAÎNÉ D'UN SYSTÈME DE VISION ARTIFICIELLE

(43) Date of publication of application: 26.11.2025
(73) Proprietor: Sick IVP AB, 583 35 Linköping (SE)
(72) Inventor: HEDBERG, Erik, 582 17 Linköping (SE)
(74) Representative: Bergenstråhle & Partners AB

(56) References cited:
- US-B1- 11 257 006
- XIN-JING WANG ET AL: "AnnoSearch: Image Auto-Annotation by Search", CONFERENCE ON COMPUTER VISION AND PATTERN RECOGNITION, 2006 IEEE COMPUTER SOCIETY , NEW YORK, NY, USA 17-22 JUNE 2006, IEEE, PISCATAWAY, NJ, USA, vol. 2, 17 June 2006 (2006-06-17), pages 1483 - 1490, XP010923209, ISBN: 978-0-7695-2597-6, DOI: 10.1109/CVPR.2006.58
- WELINDER PETER: "Hybrid Human-Machine Vision Systems: Image Annotation using Crowds, Experts and Machines", 17 May 2012 (2012-05-17), XP093221669, Retrieved from the Internet <URL:http://google.com>
- SAMIEI SALMA ET AL: "Toward Joint Acquisition-Annotation of Images with Egocentric Devices for a Lower-Cost Machine Learning Application to Apple Detection.", SENSORS (BASEL, SWITZERLAND) 27 JUL 2020, vol. 20, no. 15, 27 July 2020 (2020-07-27), XP002812506, ISSN: 1424-8220

## Description

### TECHNICAL FIELD

Embodiments herein concern arrangements and methods for providing annotated training images for use in training of a trainable image content recognition algorithm of a machine vision system.

### BACKGROUND

Machine vision systems, sometimes also referred to as computer vision systems, are for example used in the industry and then often referred to as industrial vision systems. Such system comprises one or more cameras. Sometimes the system is or correspond to a camera, that is, the system is mainly or only a camera, or implemented in the camera or same unit as the camera.

Further, machine vision systems, or image content recognition solutions in general, are increasingly based on machine learning, more specifically on trainable image content recognition algorithms. There exist many such algorithms, the most common ones are in the form of neural networks, like ResNet or MobileNet, which can be trained, or in other words optimized, using numerical methods, such as back-propagation.

Training of an algorithm like this for a machine vision system typically requires many images to train on to thereby learn and/or improve an ability of image content recognition to a sufficient degree for the algorithm to provide a desirable response regarding images it will be used with after the training. In other words, the training is performed to enable the algorithm to perform its task after the training, for example when used in a machine vision system that may be part of a production line. Exactly what the task is, what content is to be recognized, the desired response to be provided and what is considered sufficient, vary significantly between different applications. The same machine vision system and algorithm but trained differently may be used for different applications. An algorithm and machine vision system being used for a first application may be (re)configured and/or (re)trained for use in another second application. This may happen when the kind of objects to be recognized are changed and/or if the image recognition task(s) to be performed changes. Retraining may also be performed if it turns out that an already trained algorithm does not perform as well as it should.

What images that are suitable to train on are of course dependent on many different factors in practice, such as the intended application of the trained algorithm, the algorithm, its task, what content is to be recognized, the desired response to be provided. An image for use in training is typically and herein referred to as a training image. In practice, training images are often provided based on what it is known or believed that the algorithm will encounter and shall be able to handle after the training. The training images can include both clear, simple and non-problematic images, as well as such that are more difficult to handle and perform the image recognition task on.

During the training, the algorithm needs to be informed about content in the images being used, that is, in the training images, for example what is shown, or not shown, in the training images, or more generally, be informed about some properties of content in the image and that is relevant for and useful for the training. For example, if an algorithm shall be able to classify images of fruits as apples or pears, it is realized that it is beneficial to train om images where it is known that all fruits shown are either apples or pears, since the algorithm then can learn about what is characteristic for apples and pears separately.

Annotation information is information associated with a training image and that indicates or identifies, properties of content in the image for use in the training using the training image. A training image with associated annotation information may be referred to as an annotated training image. Annotation information regarding a training image, that a certain image content recognition algorithm shall train on, can thus be said to correspond to information about some properties of content in the training image that are useful for the algorithm when training on the training image. Another way to put it is that annotation information corresponds to information that a trainable image content recognition algorithm can utilize to, through training, improve its ability to perform its image recognition based task(s).

Another example: If the algorithm shall be able to detect damaged objects it is relevant to train on images of differently damaged objects and information that identifies these images as of damaged objects, but it is also of interest to train on images of non-damaged objects and information that identifies these images as of non-damaged objects.

As realized from this, the image content, or properties thereof, that the annotation information directly relates to, need not be the same image content that the algorithm is to recognize according to its task after the training.

Annotating a training image, that is, performing annotation, is about determining and associating annotation information with the training image.

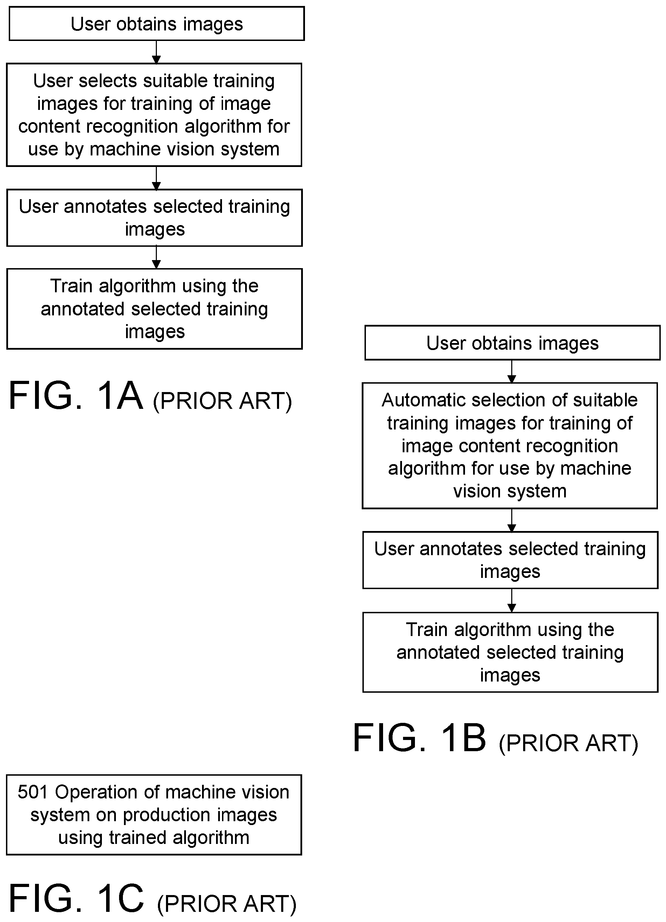

Generating and/or collecting images for training, and annotating them, are typically labor intensive tasks. **Figure 1A** illustrates a basic prior art method with actions. A user first obtains images, for example generates them and/or gets already generated images from somewhere. The user then selects which to use as training images or may simply use all, or as many as possible, of the obtained ones. These obtaining and selecting actions may of course be combined. Thereafter the user annotates the images and the resulting annotated training images are used to train the algorithm.

It is realized that selecting the training images requires effort from the user, takes time and that the effort and time increase with the number of images and of course also depend on how the selection and annotation is made.

**Figure 1B** is a flow chart schematically illustrating another prior art method, where the selection is automatized. That is, there is automatic selection of suitable training images for training of image content recognition algorithm for use by machine vision system.

So called active learning can be utilized, that is, where a system somehow determines which of collected data points, such as images, would be the most useful to have annotated, and only presents those examples to a human user for annotation. An example of such automatic selection as illustrated in Figure 1B can be found in the patent application US 20220189185 A1 that describes an active learning system for a machine vision system.

There are also concepts such as semi-supervised learning or self-training. In these cases, instead of presenting images for annotation, a learning system determines images that the algorithm is confident about and then autonomously annotates these images and trains on them, in the hope that it will become more confident also about other images. It is realized that this may not always be the result.

In general, it is difficult to fully automatize selection and annotation with good result without some human involvement that even may need to be significant.

**Figure 1C** is a flow chart to, in relation to Figures1A-B, schematically illustrate that operation of a machine vision system using a trained algorithm is separate from the training as such. Images that are produced by the machine vision system during normal operation, that is, post-training, and on which images the trained algorithm is used, may be referred to as production images.

The training is normally separated in space and time from where and when the algorithm eventually is used after the training. For example, the training of an algorithm for a machine vision system is typically performed remotely from the machine vision system and need not even involve any physical machine vison system at all.

A typical procedure is that a machine vision system is delivered and/or set up with an already trained algorithm and/or a (re)trained algorithm may be received, for example from the provider of the machine vision system, and installed on the machine vision system that thereafter are operated using the installed (re)trained algorithm.

The following prior art is also acknowledged:
XIN-JING WANG ET AL: "AnnoSearch: Image Auto-Annotation by Search", CONFERENCE ON COMPUTER VISION AND PATTERN RECOGNITION, 2006 IEEE COMPUTER SOCIETY , NEW YORK, NY, USA 17-22 JUNE 2006, IEEE, PISCATAWAY, NJ, USA, vol. 2, 17 June 2006 (2006-06-17), pages 1483-1490, XP010923209, DOI: 10.1109/CVPR.2006.58 ISBN: 978-0-7695-2597-6
US 11 257 006 B1 (ANSCHEL ORON [IL] ET AL) 22 February 2022 (2022-02-22)
Welinder Peter: "Hybrid Human-Machine Vision Systems: Image Annotation using Crowds, Experts and Machines", , 17 May 2012 (2012-05-17), XP093221669, Retrieved from the Internet: URL:http://google.com
SAMIEI SALMA ET AL: "Toward Joint Acquisition-Annotation of Images with Egocentric Devices for a Lower-Cost Machine Learning Application to Apple Detection.", SENSORS (BASEL, SWITZERLAND) 27 JUL 2020, vol. 20, no. 15, 27 July 2020 (2020-07-27), XP002812506, ISSN: 1424-8220

### SUMMARY

In view of the above, an object is to provide one or more improvements or alternatives to the prior art, such as providing improvements regarding provision of annotated training images for use in training of a trainable image content recognition algorithm of a machine vision system.

According to a first aspect of embodiments herein, the object is achieved by a method for providing one or more annotated training images for use in training of a trainable image content recognition algorithm of a machine vision system. Said machine vison system being operative, by means of the trainable image content recognition algorithm, to recognize content in images captured by the machine vision system. Annotation information is obtained for one or more intermediate images to be captured by the machine vision system. The annotation information indicates properties of content in said intermediate images and is content for recognition by the trainable image content recognition algorithm. Said properties are such that, if said algorithm would be trained on the intermediate images, the training would benefit from knowledge that said intermediate images contain content with said properties. Further, the annotation information is obtained in advance before the one or more intermediate images that the annotation information relate to, are being captured by the machine vision system. The machine vision system is operated so that said one or more intermediate images are captured by the machine vision system in accordance with the obtained annotation information. It is provided one or more annotated intermediate images that correspond to said one or more intermediate images captured by the machine vision system with annotation in accordance with the obtained annotation information. Said one or more annotated training images are provided based on at least one of said annotated intermediate images.

According to a second aspect of embodiments herein, the object is achieved by one or more devices for providing one or more annotated training images for use in training of a trainable image content recognition algorithm of a machine vision system. Said machine vison system being operative, by means of the trainable image content recognition algorithm, to recognize content in images captured by the machine vision system. Said one or more devices are configured to obtain annotation information for one or more intermediate images to be captured by the machine vision system. The annotation information indicates properties of content in said intermediate images and is content for recognition by the trainable image content recognition algorithm. Said properties are such that, if said algorithm would be trained on the intermediate images, the training would benefit from knowledge that said intermediate images contain content with said properties. Further, said one or more devices are configured to obtain the annotation information in advance before the one or more intermediate images that the annotation information relate to, are being captured by the machine vision system. Said one or more devices are further configured to operate the machine vision system so that said one or more intermediate images are captured by the machine vision system in accordance with the obtained annotation information. Moreover, said one or more devices are configured to provide one or more annotated intermediate images that correspond to said one or more intermediate images captured by the machine vision system with annotation in accordance with the obtained annotation information. Further, said one or more devices are configured to provide said one or more annotated training images based on at least one of said annotated intermediate images.

According to a third aspect of embodiments herein, the object is achieved by a computer program comprising instructions that when executed by one or more processors causes one or more devices to perform the method according to the second aspect.

According to a fourth aspect of embodiments herein, the object is achieved by a carrier comprising the computer program according to the third aspect.

Thanks to embodiments herein, that may be described as based on a type of "pre-annotation", annotated training images for use in training of the trainable image content recognition algorithm of the machine vision system can be provided without any need for image inspection for the annotation. Instead, for example, the system can automatically perform the annotation of the captured images. The combination of "pre-annotation" and using the machine vision system as such for taking the images has several further advantages. More efficient and useful annotated training images can be provided and be used in training directly or closely after the annotated training images have been provided and directly on the system. Moreover, there is enabled a reduced need for storing and using a large number of annotated training images. Also, the training as such can be made more efficient, more flexible and/or with higher degree of automation compared to what normally is the case.

The annotation as such, type and/or format of annotated images, etc, may be as in the prior art. A difference compared to prior art is that the annotation information is obtained in advance before the images, that the annotation information relate to, are being captured by the machine vision system. The annotation information is thus already available when the images are captured and thus can be directly and/or automatically be annotated by the system without the need for inspection of the images as such. As recognized from the discussion in the Background, this is different than the conventional approach for annotation of images to be used in training of a trainable image content recognition algorithms.

Moreover, embodiments herein enable the system to, preferably automatically, apply the algorithm on respective training image being captured and then perform a check to see if the algorithm is able to recognize the content in accordance with the annotation information. This way the system can know which images would be most useful to train on, namely the ones for which the algorithm failed to recognize content in accordance with the annotation information. The other images may be discarded, thus enabling fewer but more useful annotated training images to be used for later training.

Embodiments herein further support, and/or enable user friendly operation, to efficiently accomplish informative and useful training images. For example, embodiments herein make it possible to, in principle in real time, give feedback to a control system or user, for example operator of the machine vision system, that controls what is being imaged, such as an object. This way it is possible to more or less directly know when something imaged, for example a certain pose of the object, could not be recognized by the algorithm in accordance with the annotation information. Thus, embodiments herein enable information to be available, directly after an image has been taken by the system, that indicate if the image is of interest to further train on or not. The control system or user can from this feedback learn how to produce, and be encouraged to next attempt produce another image that cannot be recognized in accordance with the annotation information, that is, to produce another training image that will be useful to train on.

### BRIEF DESCRIPTION OF THE DRAWINGS

Examples of embodiments herein are described in more detail with reference to the appended schematic drawings, which are briefly described in the following.
Figures 1A-C are schematic block diagrams for exemplifying prior art method and actions.
Figure 2 schematically illustrates a simplified example of a machine vision system that may be used to and/or be configured to carry out embodiments herein.
Figure 3A is a flowchart for schematically illustrating a method according to embodiments herein.
Figure 3B is a block diagram schematically illustrating and exemplifying some of the actions that are part of the method in Figure 3A.
Figure 4 is a block diagram schematically illustrating and exemplifying some embodiments of the method in Figure 3A.
Figure 5 is a schematic block diagram for illustrating embodiments of one or more devices configured to carry out the method in Figure 3A.
Figure 6 is a schematic drawing illustrating some embodiments relating to computer program(s) and carriers thereof

### DETAILED DESCRIPTION

Embodiments herein are exemplary embodiments. It should be noted that these embodiments are not necessarily mutually exclusive. Components from one embodiment may be tacitly assumed to be present in another embodiment and it will be obvious to a person skilled in the art how those components may be used in the other exemplary embodiments.

To enable better understanding, the prior art situation and problems indicated above in the Background will be further elaborated upon before embodiments herein are described.

To train an image content recognition algorithm as discussed in the Background, a very large number of training images are typically being used although perhaps only a few of them will actually add something informative and useful for the training. That is, useful in the sense that something new is being added that can be "learnt" from and that will result in some resulting improvement in the ability to recognize image content and perform the task of the algorithm. However, it is typically not known in advance which training images that are the best to use. Instead said very large number is used to make it likely that sufficient number of useful images will be included. Hence a large number of images are used and consequently also have to be annotated, although they may not actually add something useful.

As already mentioned in the Background, the training is often performed as a separate action that may be separated in space and time from where and when the machine vision system will use the trained algorithm.

Using and training on a large number of annotated training images is, as such, not a big problem when the training is performed prior to and separate from use of the trained algorithm in the machine vision system. It is then often sufficient time, processing power and memory capacity available.

However, the conventional approach has been found to be more a problem if and when a machine vision system in operation, after training, turns out to perform bad in content recognition based on the trained algorithm it is using, and for this, or another reason, needs retraining. For the reasons above, the retraining will typically result in significant delays since new annotated training images have to be obtained from and/or by someone. Then the retraining be performed on these, which conventionally may take part remotely and/or by another party than operating the system.

Many machine vision system are flexible and (re)configurable, to some extent at least, so that they can be configured for different image content recognition tasks, for example if an object to be recognized changes. That is, the system is not only for fix use according to the first application and task that the system was setup and used for. It would be beneficial if such changes and reconfigurations could be done as easily and efficient as possible, without having to for example involve the system provider and/or any other party for the retraining. It is also desirable to, if possible, not having to obtain and annotate a large number of new training images, perform training of these, then have to test the newly trained algorithm on the machine vision system and if it does not perform sufficiently well, repeat the procedure etc.

In view of the above observations, it was identified a need to be able to more efficiently (re)train an image content recognition algorithm part of a machine vision system, particularly of an already installed and operative such system, when the application and/or image recognition task(s) changes.

The training images could for example be captured locally and by the machine vision system itself. However, it would still, for same reasons as above, be needed many images to be taken, annotated, and then perform the training on etc. This still takes time and if it is to be performed by an operator of the machine vision system, this is a different type other work than during normal operation. Another problem that may arise in such situation is memory limitation of the machine vision system, for example the camera, that is typically not suitable for storing and handling a large number of images since this is not needed during normal operation.

Embodiments herein are based on realization that a solution to problems indicated above and in the Background would be to "pre-annotate" images before they are taken by the machine vision system itself, that is, for example determine annotation information first and thereafter produce images according to this annotation information by the machine vision system. The annotation of images taken can be performed automatically by the system if it knows the annotation in advance. The system, for example the camera, may be configured to associate the thus already existing annotation information with images being captured according to this annotation information.

When using the system to produce the annotated training images, the algorithm, as such, is preferably also directly used on each captured annotated image for content recognition, that is, it is used correspondingly as during normal operation although the main purpose at this point is to produce annotated training images. The system should then, preferably automatically, apply the algorithm on respective training image being captured and perform a check to see if the algorithm was able to recognize the content in accordance with the annotation information. In other words, the algorithm is used and tested, in principle directly, on the annotated training image. Note that this is different from the training of the algorithm on the image. This way the system can know which images would be most useful to train on, namely the ones for which the algorithm failed to recognize content in accordance with the annotation information. The other images may be discarded. This enables fewer but more useful annotated training images to be saved and used for later training, and thus a reduced need for storing a large number of images.

It is even possible to temporary, and even automatically, enter a (re)training mode when the check indicates a useful annotated training image has been produced, or after a certain number of such images have been produced. After such training session and a thereby improved image content recognition ability, the procedure of capturing new images for training can continue but this time using the newly trained and thereby improved algorithm. Hence, useful annotated training images and training on these can be accomplished in an iterative and combined manner, where also the algorithm and its ability is tested. Note that, to begin with, the algorithm may have no or only have a basic ability of content recognition, for example from earlier basic training and/or according some default ability.

Moreover, as realized from the above, more or less directly after an image has been captured by the system there can, through said check, be information available if the image was as image of interest to (further) train on or not. This enables to, in principle in real time, provide feedback to a control system or user, for example operator, of the machine vision system, that controls what is being imaged, such as an object, so that it is possible to more or less directly know when something being imaged, for example a certain pose of the object, failed to be recognized by the algorithm in accordance with the annotation information and thus would be useful to train on. The control system or user can use and/or learn from this feedback how to produce, and be encouraged to produce, more useful training images than else would be the case. That is, there is assistance in provision of images that are in accordance with the annotation information but too tricky for the algorithm to handle without further training and that thus are of particular interest to train on. The control system or user can for example "compete" with and try to win over the algorithm by attempting to produce images in accordance with the annotation information but that the algorithm cannot recognize to be in accordance with the annotation information. Further, if (re)training is included in the procedure, this "competition" with the algorithm will at the same time be a test of the algorithm, and when the algorithm has been, or appears to have been, trained to be sufficiently good for use during normal operation, the training and production of further annotated training images can stop. Such testing and time for is normally needed anyway.

Embodiments herein based on the above thus enable efficient provision of annotated training images in a procedure that that can be combined with (re)training and testing of the trained algorithm and thereby provide further advantages.

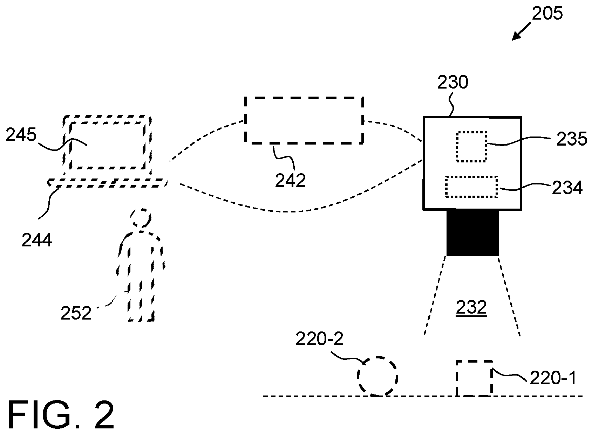

**Figure 2** schematically illustrates an example of a machine vision system 205 that may be used to and/or be configured to carry out embodiments herein. The machine vision system 205 comprises a camera 230 with an image sensor, in the figure and herein exemplified by as an image sensor 234.

The camera 230 is arranged and/or configured to capture images as part of operation of the machine vision system 205, that is, as part of its normal operation. The images are of what is located in a field of view 232 of the camera 230 when the image is captured. For example, respective image may be imaging one or more objects. What is being imaged typically change in some way between images, for example change of object(s) and/or that object(s) changes position and/or pose between images, such as a resulting from movement of the object(s) in and/or through the field of view 232 between images. There may for example be a conveyor belt (not shown) or similar that change what is in the field of view 232. Also other ways of replacing and/or placing what to be imaged in the field of view 232 are of course possible, such as from operation and movement by a robot arm or similar, or even by a human, or any other way for doing this as known from the prior art. In the shown schematic example there are exemplary schematic objects of different geometrical shape that are imaged; a first object 220-1 that is a cube and a second object 220-2 that is a sphere. The camera 230 may thus image the cube in 2D as a square and the sphere as a circle.

The camera 230 may further comprise one or more processors 235, memory etc., in addition to the image sensor 234 and/or the image sensor 234 may have some integrated processing capabilities itself. There is of course typically also input and/or output interfaces etc., such as for control of the camera and/or input and/or output of information, such as captured image(s) and/or information extracted from captured images. The one or more processors 235 may be used to integrate capabilities same or similar to a computer in the camera, that is in the same unit, making it more autonomous and able to perform more processing and/or control of its own. That is, without the need for further and/or separate unit(s), such as a separate computer, to get corresponding function and/or to be able to, for example, enable simple setup process and/or quicker processing owing to a reduced need to communicate between separate units. In some embodiments, the system 205 corresponds to the camera 230, that is, the system 205 may be in the form of, or be implemented as, a single unit that is, corresponds to, or at least resembles, a camera and contain camera functionality. Also network capabilities, light sources etc. may be integrated in such unit, for example in a camera corresponding to the camera 232.

However, in some embodiments the camera 232 is a camera unit with only more specific imaging capabilities, for example, in addition to the imaging capability, some image processing capabilities may be in the camera 232. The camera 232 may be connected to one or more other parts of the system, such a control device 242 as exemplified in the figure, that have further processing capabilities. The control device 242 may be configured to control camera 230 and other parts, if any, of the system 205. The control device 242 may comprise one or more processors, memory etc. and may correspond to a computer.

The machine vison system 205 is operative, by means of a trainable image content recognition algorithm, to recognize content in images captured by the camera 230. The trainable image content recognition algorithm as such may be a prior art algorithm and may be stored in and/or be for execution by the camera 230 or the control device 242 or other part of the system 205 with suitable computing capabilities. The same unit that is configured to execute the algorithm is preferably configured so it can also train the algorithm using annotated training images. The algorithm may alternatively be trained by another unit that may be part of the system 205, or that is external, even remote, to the machine vision system 205.

The camera may be a 2D or 3D-camera, may have built-in processing capabilities and/or have communication, such as streaming, capabilities of images to another device, for example to the control device 242 or other part of the system 205, for example with suitable computing capabilities for executing the trainable image content recognition algorithm and/or for training thereof, and/or for performing actions of embodiments herein.

The system 230 may comprise a user interface and/or user interface device, for example a user interfacing arrangement 245, such as a display, or computer screen, that may correspond to or be part of a computing unit 244, such as laptop or stationary computer. As used herein, by user interfacing arrangement is meant an arrangement, such as display, computer screen and/or computer suitable to act as use interface to a user, typically human, for example an operator of the system 230, exemplified by a user 252 in the figure. The user interface may be one-way but is typically two-way, that is, both for providing information to the user 252, such as visually and/or audially, and to receive input from the user 252.

In some embodiments, the user interfacing arrangement 245 is the same or is partly combined with the control unit 242. The user interfacing arrangement 245, for example a display, such as a computer screen, may be connected to another device, such as the control device 242 and/or or the camera, that have processing capabilities regarding input and/or output via the user interfacing arrangement 245.

A trainable image content recognition algorithm, as mentioned above, including the Background, and that may be used with embodiments herein, may, as should be realized by the skilled person, be described as a trainable algorithm for performing tasks based on image recognition, that is, image recognition tasks. The image content recognition algorithm is configured and/or at least partly trained and/or trainable, to perform such tasks. Except from the image recognition as such, said tasks may differ between different algorithms and applications. Hence, the image content for recognition, for example object(s) in an image, and properties of interest for the annotation may differ between different algorithms and tasks. However, the trainable image content recognition algorithm, and any task that it is configured to perform, are, as such, no special for embodiments herein and may be conventional ones, such as in the prior art. The training of the trainable image content recognition algorithm being based on annotated training images that as such may correspond to such discussed above and in the Background.

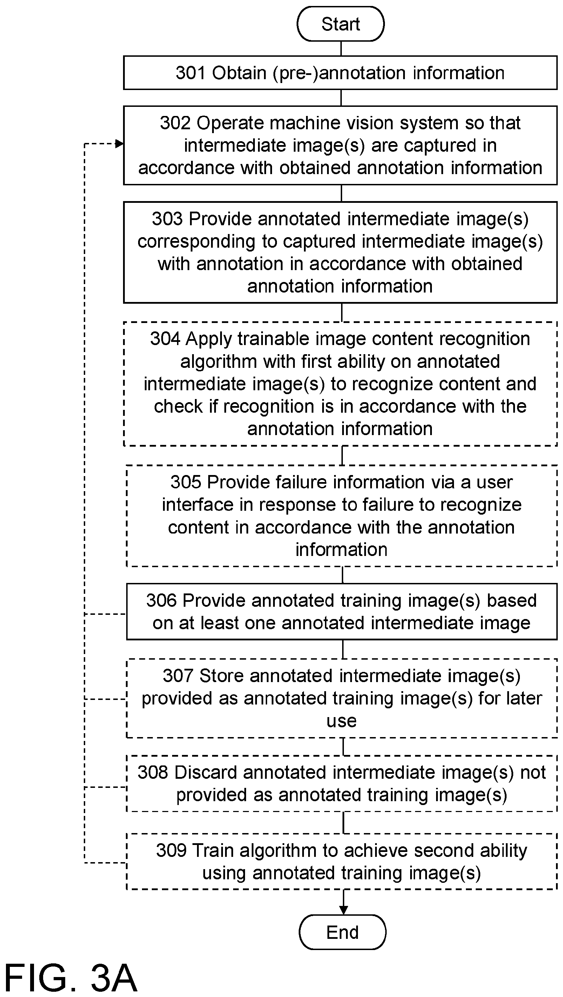

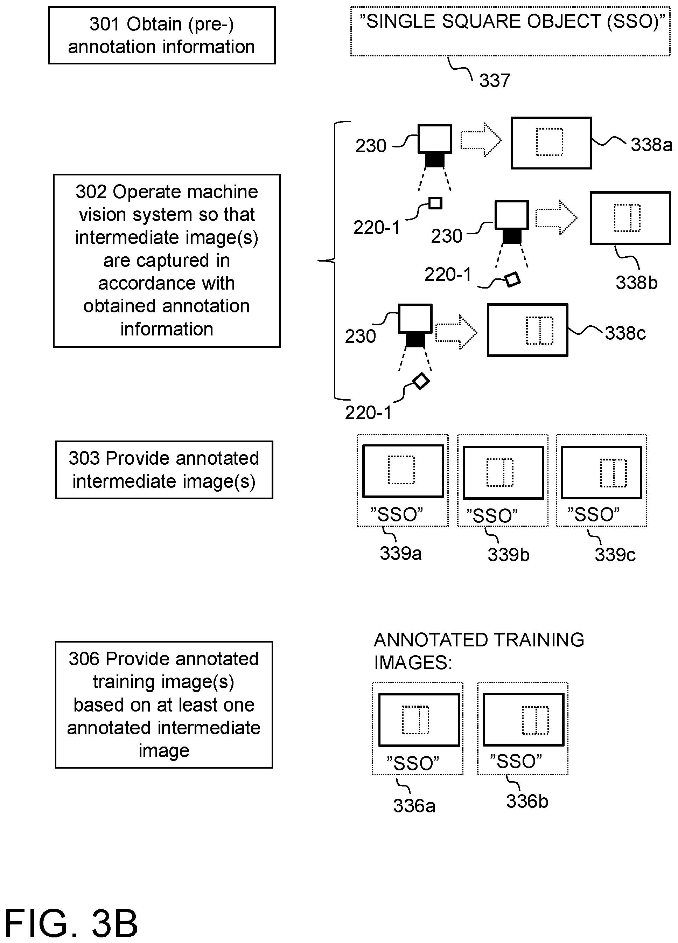

**Figure 3A** is a flowchart for schematically illustrating embodiments of a method according to embodiments herein. **Figure 3B** is a block diagram schematically illustrating and exemplifying some of the actions that are part of the method in Figure 3A.

The actions below, which may form the method, are for providing one or more annotated training images for use in training of a trainable image content recognition algorithm of a machine vision system, such as the machine vision system 205 that will be used to exemplify the machine vision system in the following. Annotated training images 336a-b in Figure 3B are used in the following to exemplify the annotated training images. The machine vison system 205 is operative, by means of the trainable image content recognition algorithm, to recognize content in images captured by the machine vision system 205.

The method and/or actions below and indicated in Figure 3A may be performed by device(s), i.e. one or more devices, such as one or more devices of the machine vision system 205, for example the camera 230 and/or the control device 242. In some embodiments the devices() are or corresponds to the machine vision system 205. The method and/or actions thereof may thus, at least partly, be computer implemented. Device(s) for performing the method and actions thereof are further described below.

Note that the actions below may be taken in any suitable order and/or be carried out fully or partly overlapping in time when this is possible and suitable.

### Action 301

It is obtained annotation information for one or more intermediate images to be captured by the machine vision system 205. The annotation information indicates, such as discloses, identifies or describes, properties of content in said intermediate images. Said content is for recognition by the trainable image content recognition algorithm. The properties are such that, if said algorithm would be trained on the intermediate images, the training would benefit from knowledge that said intermediate images contain content with said properties.

In the example of Figure 3B, annotation information 337 discloses "a single object with square shape" or correspondingly an "imaged single cubic object". To simplify and facilitate understanding the example, the annotation information 337 is referred to as "single square object" or "SSO" in Figure 3B. In the following actions, the annotation information 337 will be used as non-limiting example of the annotation information. What the annotation information may be, including further examples, are separately discussed below.

The annotation information 337 may be provided, such as input and/or or sent, to the device(s) carrying out the present action, for example the machine vision system 205, that thereby obtains, for example receives, the annotation information 337. This provision to the device(s) may be done by a user, such as the user 252, for example an operator of the machine vision system 205. Provision by input may be via a user interface, UI, preferably a graphical user interface (GUI), such as via and/or on the user interfacing arrangement 245.

In some embodiments, the obtained annotation information is fully or partly predetermined. The user may for example via the UI select from predetermined annotation information, for example from a list, which specific annotation to be used for the intermediate images to be captured by the machine vision system 205 as part of action 302 below.

### Action 302

The machine vision system 205 is operated or operates so that said one or more intermediate images are captured by the machine vision system 205 in accordance with the obtained annotation information 337. In other words, such that the intermediate images being captured are valid for the annotation information.

In practice, to facilitate implementation of the method and/or with existing systems, the operating action of the method may partly involve a user, typically the same user, such as operator of the system, as already mentioned, for example the user 252. The user 252 may in the present operating step, based on the annotation information 337, that the user self may have input to the system as explained above, control what is being imaged during operation so that the intermediate images will be in accordance with the annotation information 337. In the example, thus make sure a single cubic object is imaged in different poses, one per image, such as intermediate images 338a-c that will be used as examples in the following. Additionally, or alternatively, the user 252 may be prompted, hinted and/or or instructed, via said or another UI, about what to be imaged, such as certain object(s), and/or variations to cover, such as different poses or arrangements what is being imaged, for example said certain object(s). This should also be done, of course, so that the intermediate images 338a-c that are captured by the system 205 will be in accordance with the annotation information, and/or to facilitate capturing variations in the intermediate images that are useful for the training.

The present operating action may alternatively be more or fully automized, for example without involvement of a user, where the machine vision system 205 may be configured to itself directly control what will imaged based on annotation information. The annotation information may be predetermined and/or in association with information about what to image so that the intermediate images will be in accordance with the annotation information. It is even possible to contemplate a system that itself determines what would be beneficial to use for training, that provides annotation information accordingly and then controls what will be imaged based on that and in accordance with the annotation information. For example a robot that holds and/or places on a conveyor belt various combinations and/or poses of object(s) to be imaged based on instructions from the machine vision system 205.

### Action 303

One or more annotated intermediate images are provided, preferably by means of the machine vision system 205. Said one or more annotated intermediate images correspond to said one or more intermediate images 338 captured by the machine vision system 205 with annotation in accordance with the obtained annotation information 337. Again, with reference to the example of Figure 3B, the annotated intermediate images are in the following exemplified by annotated intermediate images 339a-c. The annotation information is further and separately discussed below.

### Action 304

In some embodiments, said trainable image content recognition algorithm, having a first ability of content recognition, is applied on said one or more annotated intermediate images 339a-c, to recognize content of respective annotated intermediate image 339a-c. In these embodiments it is also checked if the recognition is in accordance with the annotation information of the respective annotated intermediate image.

It should be appreciated that this action easily can be automized. In addition to what the algorithm recognizes, a check is thus made whether what is being recognized is in accordance with the annotation information. For example, as in the example of Figure 3B, if the annotation information 337 is about there being only a single square object in each image, it is checked if the recognition is in accordance with this, for example that the single square object has been recognized, such as detected, in the image by the algorithm as expected. Just to give another example: If the annotation information instead is about that a certain number of apples and/or only apples are being imaged, it is checked if the recognition is in accordance with this and for example the correct number and/or only apples, and for example no pear, is recognized. As realized, in the context of embodiments herein, it is mainly of interest to know when there is failure, that is, when the recognition is not in accordance with the annotation information. This indicates that it would be beneficial with improvement and thus that the corresponding intermediate image is of interest to train on to achieve a second ability that is an improvement of the first ability. This is further discussed below under action 306

### Action 305

In some embodiments, there is provided failure information via a user interface of said machine vision system 205 in response to failure of said algorithm with said first ability to recognize content of the respective annotated intermediate image, for example of the intermediate image 339b, in accordance with its annotation information 337. The user interface may for example be of the user interfacing arrangement 245. This way a user, such as the user 252, of the machine vision system 205 and that is in control of what is being imaged, can get feedback via the user interface about the failure. Thereby the user can control next image(s) based on the failure information to increase the possibility of further failures and thus of useful training images.

Preferably the feedback is direct and/or in association with what was imaged and thus generated the respective annotated intermediate image 339a-c. That is, so the user can get direct or as soon as possible feedback and response to what the user controlled to be imaged. For example, in the example of Figure 3B, if the user 252 places a cubic object with a pose that results in the annotated intermediate image 339b and the machine vision system 205, with the algorithm having the first ability, fails to recognize that the image shows a single square object, the user 252 should directly get feedback about the failure and thereby, in the example, be informed that the object pose was problematic for the algorithm. In the present context such failure is good since it means that an image has been produced that is particularly valuable to train on. As a result, the user 252 can find out and learn what the algorithm is not good at recognizing properly and the user can control what is being subsequently imaged based on that. This means more efficient generation of useful annotated training images, that is, such that should result in improved abilities if the algorithm is trained on them.

Note that the user interface does not need to be advanced, or need not even be a GUI, such as via a computer screen. Alternatively or additionally a simple light, for example color coded and/or via a light emitting diode, and/or audio signal can be used.

### Action 306

The one or more annotated training images 336a-b are provided based on at least one of said annotated intermediate images 339a-c.. The method does not need to provide all annotated intermediate images as annotated training images, in other words as output from the method, although this may be the case.

In the embodiments where action 304 is performed, a respective annotated intermediate image, for example the annotated intermediate image 339b, of said annotated intermediate images 339a-c may be provided as a respective annotated training image, for example the annotated training image 336a, of said annotated training images, in response to failure of said algorithm with said first ability to recognize content of the respective annotated intermediate image 339b in accordance with its annotation information. In the example of Figure 3B, this may be the case if the algorithm having said first ability is not able to detect that there is a single square object in the annotated intermediate image 339b due to that it has problem with the pose of the object as it is imaged in the annotated intermediate image 339b. This way useful annotated intermediate images can efficiently be identified and provided as annotated training images, while other, less useful, intermediate images may be discarded. There is no, or at least less, benefit in storing or using intermediate images for which the algorithm is already able to correctly recognize image content in accordance with the associated annotation information.

Note that also the present action, just as action 304, can be performed in an automized manner..

As indicated in the figure, when the present action has been performed, action 302 may be performed again to capture yet another image or images in accordance with the annotation information, for example with different poses and placements of the cubic object so that further image(s) of single square object is formed and actions 303-306 may then be performed for said another image(s) etc.

### Action 307

In some embodiments, said respective annotated intermediate image, for example the annotated intermediate image 339b, that in action 306 was provided as the respective annotated training image, such as the annotated training image 336a, are stored in memory for later use.

As indicated in the figure, in embodiments with the present action and when it has been performed, action 302 may be performed again to capture yet another image or images in accordance with the annotation information, for example with different poses and placements of the cubic object so that further image(s) of single square object is formed and actions 303-307 may then be performed for said another image(s) etc.

### Action 308

In the embodiments where action 307 is performed, remaining one or more annotated intermediate images, for example the annotated intermediate image 339a, not provided as said said one or more annotated training images, for example the annotated training image 336a, are discarded. This way memory storage space can be saved.

The respective annotated training image, such as the annotated training image 336a, may first be stored locally, for example in a camera, such as the camera 230, or other device of the machine vision system 205. This may be the case when the image is to be used for training soon, that is, later but close in time. Additionally, or alternatively, the respective annotated training image may be stored outside the system 205 or even remotely, such as on a server or computer cloud, and thus after being transferred. Such storing may be for longer term storage and later use, such as to be used later separate from the method as such, for example to be used later to train or train the same or similar system, and/or algorithm, as in the machine vision system 205.

As indicated in the figure, in embodiments with the present action and when it has been performed, action 302 may be performed again to capture yet another image or images in accordance with the annotation information, for example with different poses and placements of the cubic object so that further image(s) of single square object is formed and actions 303-308 may then be performed for said another image(s) etc.

### Action 309

In some embodiments, said trainable image content recognition algorithm is trained to achieve a second ability of content recognition using the respective annotated intermediate image provided as the respective annotated training image. That is, the training uses the training image with its associated annotation information. For example, if the annotated intermediate image 339b is provided as the annotated training image 336a, it is together with its annotation information 337, disclosing that the image is of single square object, used in the training, whereby the algorithm achieves a second ability where it should be better to recognize an imaged square object with a pose as in the annotated intermediate image 339b.

The second ability should be an improvement of said first ability. After having been used for said training, the respective annotated training image, such as the annotated training image 336a, may be discarded, at least locally, to save memory storage space. Additionally or alternatively it may transferred to and stored elsewhere, and/or kept stored, for longer term. It may then be reuses later, for example for training the same or similar system and/or for same application at some later point in time.

In some embodiments, the training is performed in response to failure of said algorithm with said first ability to recognize content of the respective annotated intermediate image, for example the annotated intermediate image 339b, in accordance with its associated annotation information 337. As already discussed above, failure indicate that an annotated intermediate image is of particular interest to train on.

The training may be performed automatically and/or directly, for example as soon as possible, in response to, after, or after a certain, for example predetermined, period of time after the failure, and/or after a certain number of annotated training images have been collected and/or in relation to available memory for local storage of annotated training images. The latter may be a trigger to perform training since local memory may be a scarce resource. For example, after certain number of annotated sample images have been provided and are locally stored the training may be performed based on these. Additionally, or alternatively, the training, for example using locally stored annotated sample image(s), may be performed after a certain time period during operation and/or at some point in time dedicated for training and/or in response to user input, for example the user triggering or allowing training to be performed.

The training may for example be performed automatically when the system, or camera, has possibility, capacity and capability for training and there is available one or more provided annotated training images. This way improved ability can be accomplished and be available as soon as possible without interrupting or disturbing other use of the system.

As indicated in the figure, in embodiments with the present action, when it has been performed, action 302 may be performed again to capture yet another image or images in accordance with the annotation information, for example with different poses and placements of the cubic object so that further image(s) of single square object is formed and actions 303-309 may then be performed for said another image(s) etc.

Thanks to embodiments herein and as described above in relation to Figures 3A-B, annotated training images for use in training of the trainable image content recognition algorithm of the machine vision system can be provided without any need for image inspection for the annotation. Further, with the annotation information provided in advance, before the images are taken, in other words with use of "pre-annotation", the subsequent training can be made more efficient, more flexible and/or with higher degree of automation. Moreover, it enables user friendly operation to accomplish informative and useful training images.

The annotation information as such, type and/or format of annotated images, how it is associated with an image, etc., may be as in the prior art. The difference compared to prior art is that the annotation information is obtained in advance before the images, that the annotation information relates to, are being captured by the machine vision system. The annotation information is thus already available when the images are captured and thus can be directly and/or automatically annotated by the system without the need for inspection of the images as such. As recognized from the discussion in the Background and the introductory portion above, this is different than the conventional approach for annotation of images to be used in training of a trainable image content recognition algorithms.

Further, as realized, the method according to embodiments here requires access to a machine vision system using the algorithm and is therefore typically not suitable for training of all trainable image content recognition algorithms and in all situations. However, in case of a machine vision system with such algorithm, it is rather a benefit than a drawback having to involve the system as such to provide the annotated sample images for the training, as should be realized from the examples herein.

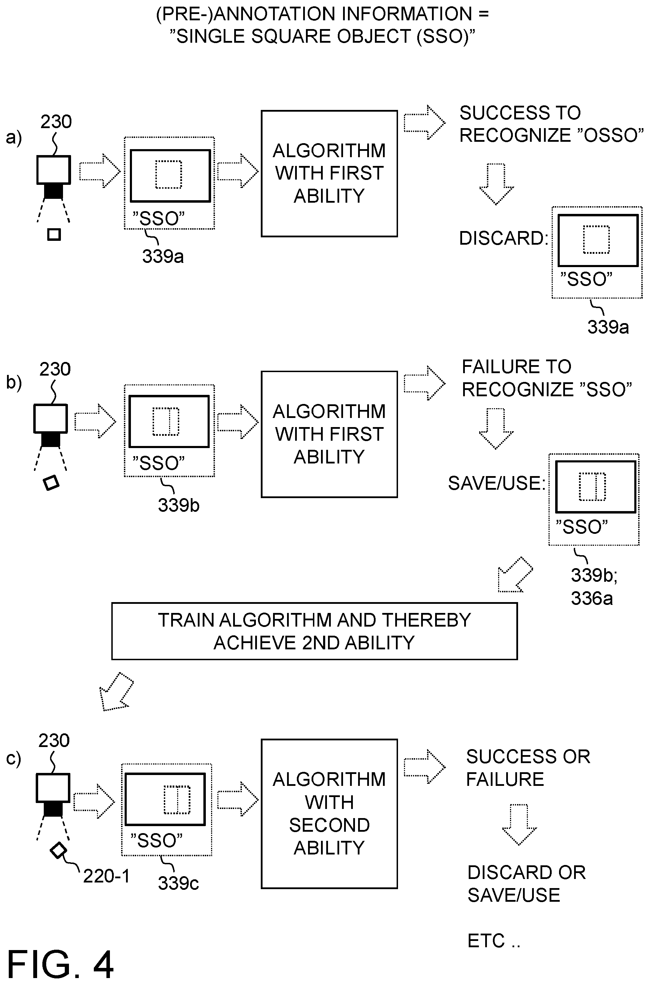

**Figure 4** is a block diagram schematically illustrating and exemplifying some embodiments of the method discussed above in relation to Figures 3A-B. Basically the example is an overview of how annotated training images can be provided in an iterative manner based on embodiments herein. The actions involved in the example have been described above and correspond to action 301-309. The annotation information is as in the previous examples, thus is the annotation information 337 that discloses that the images shall be imaging a single square object (SSO). The machine vision system 205 and the trainable image content recognition algorithm has a first ability to start with. The figure shows:
A first run a): The machine vision system 205 is operated so that to the cubic object 220-1 is imaged by the camera 230 whereby the first intermediate image 338a is captured in accordance with the obtained annotation information, that is, imaging a SSO with a first pose and placement as indicated in the figure. The machine vision system 205 is then involved to, for example automatically, provide the annotated intermediate image 339a that corresponds to the intermediate image 338a with annotation in accordance with the annotation information 337. It is checked if the recognition is in accordance with the annotation information 337. That is, it is checked if the algorithm having the first ability is able to recognize that the image is imaging a single square object. It is in the present example it is assumed that the algorithm succeeds in this, whereby the intermediate image 339a is discarded, for example from memory in the camera 230. Reason is as discussed above, if the algorithm and the machine vision system 205 already can recognize the imaged object in the image in accordance with the annotation information, there is little use to save the annotated intermediate image for use in later training of the algorithm and the machine vision system 205.
A second run b): This run is basically a repeat of actions as in run a) but now the machine vision system 205 is operated so that the cubic object 220-1 is imaged by the camera 230 with a different placement and pose and the intermediate image 338b captured in accordance with the obtained annotation information. The machine vision system 205 is then involved to provide the annotated intermediate image 339b that corresponds to the intermediate image with annotation in accordance with the annotation information 337. It is checked if the recognition is in accordance with the annotation information 337. It is in the present example assumed that the algorithm fails with this. Hence that the algorithm having the first ability is unable to recognize that the image is imaging a single square object. The intermediate image 339b should therefore be useful to train on, is therefore kept and provided as the annotated training image 336a. That is, the provided annotated training image 336a is saved for use in training. In the shown example, the training is directly performed using the annotated training image 336a, that is, the machine vision system 205 may enter a training mode and perform training on the annotated training image 336a whereby it achieves a new second ability. With the second ability the algorithm should have learned to be better to recognize an object with placement and pose as in the intermediate image 339b. The provided annotated training image 336a may of course be saved and stored for later (re)use as well.
A third run c): This run is just for showing that runs as described above for run a) and run b) may continue as long as desirable, whereby further useful annotated training images can be provided and the algorithm be trained to have further improved image content recognition abilities.

It should be realized that said checks combined with the provision of the annotated training images and the training, means there will be a test of the trained algorithm, which can be used to determine when the algorithm is considered sufficiently trained to be used on production images. Such test is often needed anyway, but is conventionally an action that is separate from both provision of annotated training images and from the training as such.

As already indicted above, embodiments herein are based on unconventional annotation regarding its origin, when and to some extent how it is used, but the annotation as such, and how images are associated with the annotation information, may be conventional. Hence, the annotation as such, for example its type and/or format and what it is about, may be conventional, such as in the prior art. Nevertheless, the annotation relates to properties of image content to be recognized that in turn relates to the algorithm and the tasks it is configured to perform. Hence, further examples of annotation information and properties of image content may be best understood by considering examples of image content and different kind of image recognition tasks that an image recognition algorithm as in embodiments herein may be configured to perform.

Examples of image recognition tasks:
- Anomaly detection - Is an object, e.g. a circuit board, looking as usual, as it should or as normal, or is there something anomalous about it, such as scratches, blobs of misplaced solder, missing components?
- Classification - Does the image look more like class A or class B, e.g. is there sunshine or rain in the scene?
- Counting - How many instances of certain type of object are present in the image? E.g. how many screws are present on this face of the machine part?
- Localization - How is an object in the image positioned? E.g. what is the precise position of the hole where the robot should place the screw?

Combinations are of course possible. For example: To detect individual object(s) and to classify them (it) and find out if there is an anomaly.

Just to give another more specific example, the content recognition could relate to one or more: to detect location(s) of individual fruits in an image, classify imaged fruit(s) based on type, such as apple(s) or pear(s), detect if any fruit is damaged, and count them.

As already indicated above, relevant properties identified by the annotation information should be such that can be utilized in the training, or in other words properties of image content that are useful to know about for the training using a training image having these properties. Since the annotation information is for use when training is performed on training image(s) that the annotation information is/are associated with, the properties should be such that the training would benefit to know about are present in the training image(s).

Examples of properties of image content that may be subject for the annotation:
- One or more classes that the image belongs to.
- One or more classes that the image does not belong to.
- Object of certain type present or not in the image.
- The number of objects of certain type present in the image.
- Total number of objects present in the image.
- Objects are not overlapping or touching any other object in the image.
- Position of an object's center position in the image.
- Shape and size of an object in the image.

Also here combinations are of course possible.

The properties may thus relate to object type or class of object(s), and/or object material, and/or object color, and/or geometrical form or shape of the object(s), and/or number of object(s), and/or overlap of objects, if the image content contain only normal content or only anomaly content, such as damaged fruit as in the previous example. For example, the annotation information may identify one or more of the following properties:
- That that all objects in an image are apples and/or that no object is a pear.
- That all objects in an image are rectangular and/or that no objects are circular.
- That all objects in an image overlap or that no object overlap.
- That there is a certain number of objects in an image.

The following is a more specific example to for further insights and understanding:
Assume that a manufacturer of pasta wants an inspection station, which should verify that the type of pasta present in packages exiting their production line are of the expected type. To train the machine vision system in the inspection station to identify types of pasta, the user may input the type of pasta as (pre-)annotation to the machine vision system as in embodiments herein. The production line and the machine vision system may then be operated so that the type of pasta in accordance with the annotation information passes the machine vision system. If the system is configured to automatically re-train when it fails to correctly predict the pasta type, the user can completely train the system by alternating between different types of pasta until the machine vision system no longer makes any errors. Compared to a traditional regime of first collecting images, labelling the images, and then training the machine vision system, the advantages in this example would be that the user does not have to manage and label images at all, only ensure that the pasta production functions as expected during the collection of images. It is sufficient to just operate the production line, the machine vision system and provide correct (pre-)annotation information. The image collection process, that is the provision of annotated training images, and the training, can be stopped whenever the system reaches desired performance corresponding to a sufficient image content recognition ability regarding the pasta. With a traditional regime, since there is no way of knowing beforehand how many annotated training images are needed, one would either have to collect more annotated training images than are in fact necessary for sufficient training of the system to satisfaction, or iteratively go back and collect more images until satisfactory performance is reached.

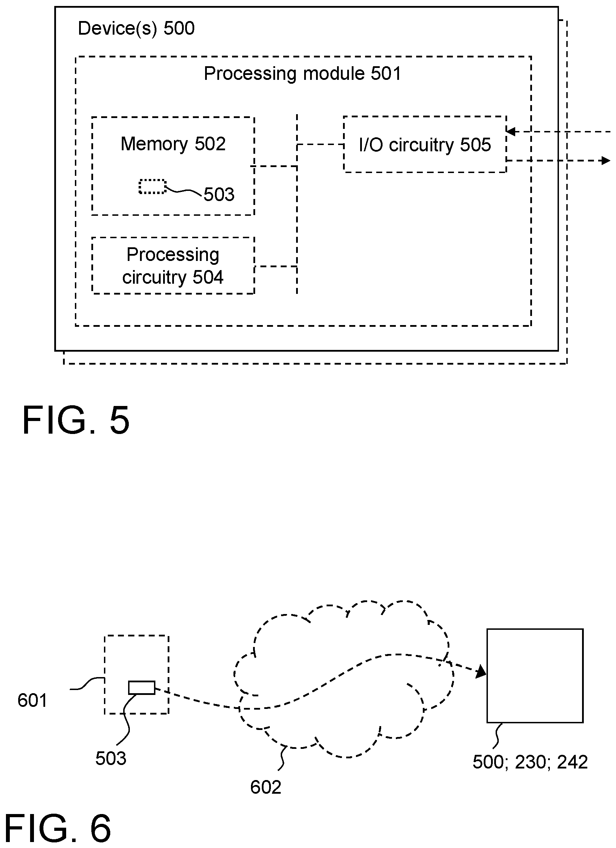

**Figure 5** is a schematic block diagram for illustrating embodiments of one or more devices 500, i.e. device(s) 500, that may correspond to devices(s) already mentioned in the above for performing embodiments herein, such as for performing the method and/or actions described above in relation to Figure 3A.

. The device(s) 500 may e.g. correspond to any one of the machine vision system 205, the camera 230, the control device 242, or other suitable device(s) part of and/or connected to the machine vision system 205. As realized by the skilled person, some embodiments of the method comprise actions that may be performed distributed by multiple devices configured to perform the actions. Moreover, control of the machine vision system may at least partly be performed remotely, for example by or via a remote computer, server or computer cloud and there may be corresponding remote device(s) that may be configured to perform the method or some action(s) thereof. However, it is typically preferred with device(s) configured to perform the method that is/are part of or in close connection with the machine vision system 205 and the imaging since this enables faster and typically more stable execution and less transfer of information.

The schematic block diagram is for illustrating embodiments regarding how the device(s) 500 may be configured to perform the method and actions discussed above in relation to Figures 3A-B. Hence, the device(s) 500 is for providing one or more annotated training images, such as the training images 336a-b, for use in training of a trainable image content recognition algorithm of a machine vision system, such as the machine vision system 205. The machine vison system being operative, by means of the trainable image content recognition algorithm, to recognize content in images captured by the machine vision system.

The device(s) 500 may comprise processing module(s) 501, such as processing means, one or more hardware modules, including e.g. one or more processing circuits, circuitry, such as processors, and/or one or more software modules for performing said method and/or actions.

The device(s) 500 may further comprise memory/ies 502 that may comprise, such as contain or store, computer program(s) 503. The computer program(s) 503 comprises 'instructions' or 'code' directly or indirectly executable by the device(s) 500, respectively, to perform said method and/or actions. The memory/ies 502 may comprise one or more memory units and may further be arranged to store data, such as configurations, data and/or values, involved in or for performing functions and actions of embodiments herein.

Moreover, respective device 500 may comprise processing circuitry 504 involved in processing, for example executing and training the algorithm, as exemplifying hardware module(s) and may comprise or correspond to one or more processors or processing circuits. The processing module(s) 501 may comprise, e.g. 'be embodied in the form of' or 'realized by' such processing circuitry 504. In these embodiments, the memory 502 may comprise the computer program(s) 503 respectively executable by processing circuitry 504, whereby respective device 500 is operative, or configured, to perform said method and/or actions thereof.

Typically the device(s) 500, e.g. the processing module(s) 501, comprises an Input/Output (I/O) module(s) 505, configured to be involved in, e.g. by performing, any communication to and/or from other units and/or devices, such as sending and/or receiving information to and/or from other devices. The I/O module(s) 505 may be exemplified by obtaining, e.g. receiving, module(s) and/or providing, e.g. sending, module(s), when applicable.

Further, in some embodiments, the device(s) 500, e.g. the processing module(s) 501, comprises one or more of obtaining module(s), operating module(s), providing modules(s), applying module(s), checking module(s), storing module(s), discarding module(s), training module(s), as exemplifying hardware and/or software module(s) for carrying out actions of embodiments herein. These modules may be fully or partly implemented by processing circuitry 504.

Hence:
The device(s) 500, and/or the processing module(s) 501, and/or processing circuitry 504, and/or the I/O module(s) 505, and/or the obtaining module(s), is/are operative, or configured, to obtain said aannotation information for said one or more intermediate images.

The device(s) 500, and/or the processing module(s) 501, and/or processing circuitry 504, and/or the I/O module(s) 505, and/or the operating module(s), is/are operative, or configured, to operate, or enable operation of the machine vision system, so that said one or more intermediate images are captured by the machine vision system in accordance with the obtained annotation information.

The device(s) 500, and/or the processing module(s) 501, and/or processing circuitry 504, and/or the I/O module(s) 505, and/or the providing module(s), is/are operative, or configured, to provide, preferably by means of the machine vision system, said.one or more annotated intermediate images.

The device(s) 500, and/or the processing module(s) 501, and/or processing circuitry 504, and/or the I/O module(s) 505, and/or the providing module(s), is/are operative, or configured, to provide said one or more annotated training images based on at least one of said annotated intermediate images.

In some embodiments, the device(s) 500, and/or the processing module(s) 501, and/or processing circuitry 504, and/or the I/O module(s) 505, and/or the applying module(s), and/or the checking module(s), is/are operative, or configured, to apply said trainable image content recognition algorithm, having said first ability of content recognition, on said one or more annotated intermediate images to recognize content of respective annotated intermediate image and to check if the recognition is in accordance with the annotation information of the respective annotated intermediate image.

In some embodiments, the device(s) 500, and/or the processing module(s) 501, and/or processing circuitry 504, and/or the I/O module(s) 505, and/or the providing module(s), is/are operative, or configured, to provide said failure information via said user interface. in response to failure of said algorithm with said first ability to recognize content of the respective annotated intermediate image in accordance with its annotation information.

In some embodiments, the device(s) 500, and/or the processing module(s) 501, and/or processing circuitry 504, and/or the I/O module(s) 505, and/or the storing module(s), is/are operative, or configured, to store said respective annotated intermediate image provided as the respective annotated training image in memory for later use.

In some embodiments, the device(s) 500, and/or the processing module(s) 501, and/or processing circuitry 504, and/or the I/O module(s) 505, and/or the discarding module(s), is/are operative, or configured, to discard any remaining annotated intermediate image not provided as annotated training image.

In some embodiments, the device(s) 500, and/or the processing module(s) 501, and/or processing circuitry 504, and/or the I/O module(s) 505, and/or the training module(s), is/are operative, or configured, to train said trainable image content recognition algorithm to achieve said second ability of content recognition using the respective annotated intermediate image provided as the respective annotated training image with its associated annotation information.

**Figure 6** is a schematic drawing illustrating some embodiments relating to the computer program(s) 503 and carriers thereof to cause said device(s) 500 discussed above to perform said method and actions.

The computer program(s) 503 comprises instructions that when executed by processing circuitry 504 and/or the processing module(s) 501, cause the device(s) 500 to perform as described above. In some embodiments there is provided one or more carriers, that is carrier(s), or more specifically data carrier(s), such as computer program product(s), comprising the computer program(s). Respective carrier(s) may be one of an electronic signal, an optical signal, a radio signal, and a computer readable storage medium, e.g. a computer readable storage medium 601 as schematically illustrated in the figure. The computer program(s) 503 may thus be stored on the computer readable storage medium 501. By carrier may be excluded a transitory, propagating signal and the data carrier may correspondingly be named non-transitory data carrier. Non-limiting examples of the data carrier being a computer readable storage medium is a memory card or a memory stick, a disc storage medium or a mass storage device that typically is based on hard drive(s) or Solid State Drive(s) (SSD). The computer readable storage medium 601 may be used for storing data accessible over a computer network 602, e.g. the Internet or a Local Area Network (LAN). The computer program(s) 503 may furthermore be provided as pure computer program(s) or comprised in a file or files. The file or files may be stored on the computer readable storage medium 601 and for example be available through download, for example over the computer network 602 as indicated in the figure, such as via a server. The server may be a web or File Transfer Protocol (FTP) server, or similar. The file or files may be executable files for direct or indirect download to and execution on said device(s) to make it perform as described above, e.g. by execution by processing circuitry 504. The file or files may also or alternatively be for intermediate download and compilation involving the same or another processor(s) to make them executable before further download and execution causing said device(s) 500 to perform as described above.

As used herein, a training, or sample, image may be described as an image for use in training of the trainable image content recognition algorithm to recognize content, or in other words, to solve its task, and/or improve its ability to do so, utilizing that some properties regarding the image content is known for the training image.

Further, as used herein, a production image may be described as an image for which the image content is to be recognized by the trainable image content recognition algorithm without knowledge in advance about what the image shows or properties of the image content, in contrast to the training images. The production images are thus images that the machine vision system is intended to operate on in normal operation. In other words, a production image may be considered an image for which it is the task of the machine vision system to, by means of the algorithm, recognize content in, for example make predictions and/or statements about the image content.

Furthermore, in connection with examples herein there are examples of some specific properties and type of annotation information. Note that these are just some of many possible examples and that embodiments herein are not limited to any specific trainable image content recognition algorithm, image content recognition task thereof, properties of image content, and/or type and/or format of annotation information. As realized, content recognition relevant for embodiments herein is typically but not necessary about object recognition. As already indicted and as should be realized by the skilled person, embodiments herein are not about or limited to any specific trainable image content recognition algorithm, but to still mention some examples, these include deep learning based methods, for example convolutional neural network, such as ResNet or MobileNet, or any conventional machine vision algorithm, including any variation and/or combination of such methods and algorithms. As also already indicted in the foregoing, the annotation information as such, for example it type and/or format and what it is about, may be conventional, which includes that it for example may be graphically and/or alphanumerically represented, such as corresponding to object mask(s) and/or shapes, and/or count of object(s).

Note that any processing module(s) and circuit(s) mentioned in the foregoing may be implemented as a software and/or hardware module, e.g. in existing hardware and/or as an Application Specific Integrated Circuit (ASIC), a Field-Programmable Gate Array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analogue and digital circuits, and/or one or more processors configured with software and/or firmware, e.g. stored in memory, that, when executed by the one or more processors may make the device(s), sensor(s) etc. to be configured to and/or to perform the above-described methods and actions.

Identification by any identifier herein may be implicit or explicit. The identification may be unique in a certain context, e.g. for a certain computer program or program provider.

As used herein, the term "memory" may refer to a data memory for storing digital information, typically a hard disk, a magnetic storage, medium, a portable computer diskette or disc, flash memory, Random Access Memory (RAM) or the like. Furthermore, the memory may be an internal register memory of a processor.

Also note that any enumerating terminology such as first device, second device, first surface, second surface, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

In the drawings, features that may be present in only some embodiments are typically drawn using dotted or dashed lines.

When using the word "comprise" or "comprising" it shall be interpreted as nonlimiting, i.e. meaning "consist at least of".

The embodiments herein are not limited to the above described embodiments. Various alternatives, modifications and equivalents may be used. Therefore, the above embodiments should not be taken as limiting the scope of the present disclosure, which is defined by the appending claims.

## Claims

1. Method for providing one or more annotated training images (336) for use in training of a trainable image content recognition algorithm of a machine vision system (205), said machine vison system (205) being operative, by means of the trainable image content recognition algorithm, to recognize content in images captured by the machine vision system (205), wherein the method comprises:
- obtaining (301) annotation information (337) for one or more intermediate images (338) to be captured by the machine vision system (205), which annotation information (337) indicates properties of content in said intermediate images (338) that is content for recognition by the trainable image content recognition algorithm and wherein said properties are such that, if said algorithm would be trained on the intermediate images, the training would benefit from knowledge that said intermediate images contain content with said properties, wherein the annotation information (337) is obtained in advance before the one or more intermediate images (338) that the annotation information relate to, are being captured by the machine vision system (205);
- operating (302) the machine vision system (205) so that said one or more intermediate images (338) are captured by the machine vision system (205) in accordance with the obtained annotation information;
- providing (303) one or more annotated intermediate images (339) that correspond to said one or more intermediate images (338) captured by the machine vision system (205) with annotation in accordance with the obtained annotation information (337), and
- providing (306) said one or more annotated training images (336) based on at least one of said annotated intermediate images (339).

2. The method as claimed in claim 1, wherein the method further comprises:
- applying (304) said trainable image content recognition algorithm, having a first ability of content recognition, on said one or more annotated intermediate images (339) to recognize content of respective annotated intermediate image (339) and check if the recognition is in accordance with the annotation information (337) of the respective annotated intermediate image (339).

3. The method as claimed in claim 2, wherein a respective annotated intermediate image (339b) of said annotated intermediate images (239) is provided as a respective annotated training image (336a) of said annotated training images (336) in response to failure of said algorithm with said first ability to recognize content of the respective annotated intermediate image (339b) in accordance with its annotation information (337).

4. The method as claimed in any one of claims 2-3, wherein the method further comprises:
- providing (305), in response to failure of said algorithm with said first ability to recognize content of the respective annotated intermediate image (339b) in accordance with its annotation information (337), failure information via a user interface (245) of said machine vision system (205), whereby a user (252) of the machine vision system (205) and in control of what is being imaged can get feedback via the user interface (245) about the failure.

5. The method as claimed in any one of claims 1-4, wherein the method further comprises:
- storing (307) said respective annotated intermediate image (339b) provided as the respective annotated training image (336a) in memory for later use; and
- discarding (308) any remaining annotated intermediate image (339a) not provided as annotated training image (336), whereby memory storage space can be saved..

6. The method as claimed in any one of claims 2-5, wherein the method further comprises:
- training (309) said trainable image content recognition algorithm to achieve a second ability of content recognition using the respective annotated intermediate image (339b) provided as the respective annotated training image (336a) with its associated annotation information.

7. The method as claimed in claim 6, wherein said training is performed in response to failure of said algorithm with said first ability to recognize content of the respective annotated intermediate image (339b) in accordance with its associated annotation information (337).

8. One or more devices (205; 230; 500) for providing one or more annotated training images (336) for use in training of a trainable image content recognition algorithm of a machine vision system (205), said machine vison system (205) being operative, by means of the trainable image content recognition algorithm, to recognize content in images captured by the machine vision system (205), wherein said one or more devices are configured to:
obtain (301) annotation information (337) for one or more intermediate images (338) to be captured by the machine vision system (205), which annotation information (337) indicates properties of content in said intermediate images (338) that is content for recognition by the trainable image content recognition algorithm and wherein said properties are such that, if said algorithm would be trained on the intermediate images, the training would benefit from knowledge that said intermediate images contain content with said properties, wherein the one or more devices are configured to obtain the annotation information (337 in advance before the one or more intermediate images (338) that the annotation information relate to, are being captured by the machine vision system (205);
operate (302) the machine vision system (205) so that said one or more intermediate images (338) are captured by the machine vision system (205) in accordance with the obtained annotation information;
provide (303) one or more annotated intermediate images (339) that correspond to said one or more intermediate images (338) captured by the machine vision system (205) with annotation in accordance with the obtained annotation information (337); and
provide (306) said one or more annotated training images (336) based on at least one of said annotated intermediate images (339).

9. One or more computer programs (503) comprising instructions that when executed by one or more processors causes said one or more devices (205; 230; 242; 500) according to claim 8 to perform the method according to any one of claims 1-7.

10. One or more carriers comprising the one or more computer programs (503) according to claim 9, wherein the one or more carriers are one or more of the following: electronic signal, optical signal, radio signal or computer readable storage medium (601).

## Patentansprüche

1. Verfahren zur Bereitstellung eines oder mehrerer annotierter Trainingsbilder (336) zur Verwendung beim Training eines trainierbaren Bildinhaltserkennungsalgorithmus eines Maschinenvisionssystems (205), wobei das Maschinenvisionssystem (205) mittels des trainierbaren Bildinhaltserkennungsalgorithmus dazu eingerichtet ist, Inhalte in von dem Maschinenvisionssystem (205) aufgenommenen Bildern zu erkennen, wobei das Verfahren Folgendes umfasst:
- Empfangen (301) von Annotierungsinformationen (337) für ein oder mehrere Zwischenbilder (338), die von dem Maschinenvisionssystem (205) aufgenommen werden sollen, welche Annotierungsinformationen (337) Eigenschaften von Inhalten in den Zwischenbildern (338) angeben, wobei diese Inhalte Inhalte sind, die von dem trainierbaren Bildinhaltserkennungsalgorithmus zu erkennen sind, und wobei die Eigenschaften derart sind, dass, wenn der Algorithmus anhand der Zwischenbilder trainiert würde, das Training von der Kenntnis profitieren würde, dass die Zwischenbilder Inhalte mit den Eigenschaften enthalten, wobei die Annotierungsinformationen (337) im Voraus empfangen werden, bevor die ein oder mehreren Zwischenbilder (338), auf die sich die Annotierungsinformationen beziehen, von dem Maschinenvisionssystem (205) aufgenommen werden;
- Betreiben (302) des Maschinenvisionssystems (205), sodass die ein oder mehreren Zwischenbilder (338) von dem Maschinenvisionssystem (205) in Übereinstimmung mit den empfangenen Annotierungsinformationen aufgenommen werden;
- Bereitstellen (303) eines oder mehrerer annotierter Zwischenbilder (339), die den ein oder mehreren Zwischenbildern (338) entsprechen, die von dem Maschinenvisionssystem (205) aufgenommen wurden, wobei die Annotierung in Übereinstimmung mit den empfangenen Annotierungsinformationen (337) erfolgt, und
- Bereitstellen (306) eines oder mehrerer annotierter Trainingsbilder (336) auf der Grundlage von mindestens einem der annotierten Zwischenbilder (339).

2. Verfahren nach Anspruch 1, wobei das Verfahren weiter umfasst:
- Anwenden (304) des trainierbaren Bildinhaltserkennungsalgorithmus mit einer ersten Fähigkeit zur Inhaltserkennung auf die ein oder mehreren annotierten Zwischenbilder (339), um Inhalte der jeweiligen annotierten Zwischenbilder (339) zu erkennen und zu überprüfen, ob die Erkennung mit den Annotierungsinformationen (337) der jeweiligen annotierten Zwischenbilder (339) übereinstimmt.

3. Verfahren nach Anspruch 2, wobei ein jeweiliges annotiertes Zwischenbild (339b) der annotierten Zwischenbilder (239) als jeweiliges annotiertes Trainingsbild (336a) der annotierten Trainingsbilder (336) bereitgestellt wird als Reaktion auf ein Versagen des Algorithmus mit der ersten Fähigkeit, Inhalte des jeweiligen annotierten Zwischenbildes (339b) in Übereinstimmung mit dessen Annotierungsinformationen (337) zu erkennen.

4. Verfahren nach einem der Ansprüche 2-3, wobei das Verfahren weiter umfasst:
- Bereitstellen (305), als Reaktion auf ein Versagen des Algorithmus mit der ersten Fähigkeit, Inhalte des jeweiligen annotierten Zwischenbildes (339b) in Übereinstimmung mit dessen Annotierungsinformationen (337) zu erkennen, von Fehlerinformationen über eine Benutzerschnittstelle (245) des Maschinenvisionssystems (205), wodurch ein Benutzer (252) des Maschinenvisionssystems (205), der die Aufnahme steuert, über die Benutzerschnittstelle (245) eine Rückmeldung über das Versagen erhält.

5. Verfahren nach einem der Ansprüche 1-4, wobei das Verfahren weiter umfasst:
- Speichern (307) des jeweiligen annotierten Zwischenbildes (339b), das als das jeweilige annotierte Trainingsbild (336a) bereitgestellt wird, im Speicher zur späteren Verwendung; und
- Verwerfen (308) aller verbleibenden annotierten Zwischenbilder (339a), die nicht als annotierte Trainingsbilder (336) bereitgestellt werden, wodurch Speicherplatz eingespart werden kann.

6. Verfahren nach einem der Ansprüche 2-5, wobei das Verfahren weiter umfasst:
- Trainieren (309) des trainierbaren Bildinhaltserkennungsalgorithmus, um eine zweite Fähigkeit zur Inhaltserkennung unter Verwendung des jeweiligen annotierten Zwischenbildes (339b), das als das jeweilige annotierte Trainingsbild (336a) bereitgestellt wird, zusammen mit den zugehörigen Annotierungsinformationen zu erreichen.

7. Verfahren nach Anspruch 6, wobei das Trainieren als Reaktion auf ein Versagen des Algorithmus mit der ersten Fähigkeit erfolgt, Inhalte des jeweiligen annotierten Zwischenbildes (339b) in Übereinstimmung mit den zugehörigen Annotierungsinformationen (337) zu erkennen.

8. Eine oder mehrere Vorrichtungen (205; 230; 500) zur Bereitstellung eines oder mehrerer annotierter Trainingsbilder (336) zur Verwendung beim Training eines trainierbaren Bildinhaltserkennungsalgorithmus eines Maschinenvisionssystems (205), wobei das Maschinenvisionssystem (205) mittels des trainierbaren Bildinhaltserkennungsalgorithmus dazu eingerichtet ist, Inhalte in von dem Maschinenvisionssystem (205) aufgenommenen Bildern zu erkennen, wobei die eine oder die mehreren Vorrichtungen dazu eingerichtet sind:
Empfangen (301) von Annotierungsinformationen (337) für ein oder mehrere Zwischenbilder (338), die von dem Maschinenvisionssystem (205) aufgenommen werden sollen, welche Annotierungsinformationen (337) Eigenschaften von Inhalten in den Zwischenbildern (338) angeben, wobei diese Inhalte Inhalte sind, die von dem trainierbaren Bildinhaltserkennungsalgorithmus zu erkennen sind, und wobei die Eigenschaften derart sind, dass, wenn der Algorithmus anhand der Zwischenbilder trainiert würde, das Training von der Kenntnis profitieren würde, dass die Zwischenbilder Inhalte mit den Eigenschaften enthalten, wobei die eine oder die mehreren Vorrichtungen dazu eingerichtet sind, die Annotierungsinformationen (337) im Voraus zu empfangen, bevor die ein oder mehreren Zwischenbilder (338), auf die sich die Annotierungsinformationen beziehen, von dem Maschinenvisionssystem (205) aufgenommen werden;
Betreiben (302) des Maschinenvisionssystems (205), sodass die ein oder mehreren Zwischenbilder (338) von dem Maschinenvisionssystem (205) in Übereinstimmung mit den empfangenen Annotierungsinformationen aufgenommen werden;
Bereitstellen (303) eines oder mehrerer annotierter Zwischenbilder (339), die ein oder mehreren Zwischenbildern (338) entsprechen, die von dem Maschinenvisionssystem (205) aufgenommen wurden, wobei die Annotierung in Übereinstimmung mit den empfangenen Annotierungsinformationen (337) erfolgt; und
Bereitstellen (306) eines oder mehrerer annotierter Trainingsbilder (336) auf der Grundlage von mindestens einem der annotierten Zwischenbilder (339).

9. Ein oder mehrere Computerprogramme (503), umfassend Anweisungen, die, wenn sie von einem oder mehreren Prozessoren ausgeführt werden, die eine oder die mehreren Vorrichtungen (205; 230; 242; 500) nach Anspruch 8 veranlassen, das Verfahren nach einem der Ansprüche 1-7 auszuführen.

10. Ein oder mehrere Träger, umfassend das eine oder die mehreren Computerprogramme (503) nach Anspruch 9, wobei der eine oder die mehreren Träger eines oder mehrere der folgenden sind: elektronisches Signal, optisches Signal, Funksignal oder computerlesbares Speichermedium (601).

## Revendications

1. Procédé permettant de fournir une ou plusieurs images (336) d'apprentissage annotées destinées à être utilisées dans l'apprentissage d'un algorithme de reconnaissance de contenu d'image pouvant être entraîné d'un système (205) de vision artificielle, ledit système (205) de vision artificielle étant opérationnel, au moyen de l'algorithme de reconnaissance de contenu d'image pouvant être entraîné, pour reconnaître un contenu dans des images capturées par le système (205) de vision artificielle, dans lequel le procédé comprend :
- l'obtention (301) d'informations (337) d'annotation pour une ou plusieurs images (338) intermédiaires devant être capturées par le système (205) de vision artificielle, lesquelles informations (337) d'annotation indiquent des propriétés d'un contenu dans lesdites images (338) intermédiaires qui est un contenu pour une reconnaissance par l'algorithme de reconnaissance de contenu d'image pouvant être entraîné et dans lequel lesdites propriétés sont telles que, si ledit algorithme était entraîné sur les images intermédiaires, l'apprentissage bénéficierait de la connaissance du fait que lesdites images intermédiaires contiennent un contenu avec lesdites propriétés, dans lequel les informations (337) d'annotation sont obtenues à l'avance avant que l'une ou les plusieurs images (338) intermédiaires auxquelles les informations d'annotation se rapportent ne soient capturées par le système (205) de vision artificielle ;
- l'exploitation (302) du système (205) de vision artificielle de sorte que ladite une ou lesdites plusieurs images (338) intermédiaires soient capturées par le système (205) de vision artificielle conformément aux informations d'annotation obtenues ;
- la fourniture (303) d'une ou de plusieurs images (339) intermédiaires annotées qui correspondent à ladite une ou auxdites plusieurs images (338) intermédiaires capturées par le système (205) de vision artificielle avec une annotation conformément aux informations (337) d'annotation obtenues, et
- la fourniture (306) de ladite une ou desdites plusieurs images (336) d'apprentissage annotées sur la base d'au moins une desdites images (339) intermédiaires annotées.

2. Procédé tel que revendiqué dans la revendication 1, dans lequel le procédé comprend en outre :
- l'application (304) dudit algorithme de reconnaissance de contenu d'image pouvant être entraîné, présentant une première aptitude à la reconnaissance de contenu, sur ladite une ou lesdites plusieurs images (339) intermédiaires annotées pour reconnaître un contenu d'une image (339) intermédiaire annotée respective et vérifier si la reconnaissance est effectuée conformément aux informations (337) d'annotation de l'image (339) intermédiaire annotée respective.

3. Procédé tel que revendiqué dans la revendication 2, dans lequel une image (339b) intermédiaire annotée respective desdites images (239) intermédiaires annotées est fournie en tant qu'une image (336a) d'apprentissage annotée respective desdites images (336) d'apprentissage annotées en réponse à un échec dudit algorithme avec ladite première aptitude à reconnaître un contenu de l'image (339b) intermédiaire annotée respective conformément à ses informations (337) d'annotation.

4. Procédé tel que revendiqué dans l'une quelconque des revendications 2 à 3, dans lequel le procédé comprend en outre :
- la fourniture (305), en réponse à un échec dudit algorithme avec ladite première aptitude à reconnaître un contenu de l'image (339b) intermédiaire annotée respective conformément à ses informations (337) d'annotation, d'informations d'échec par l'intermédiaire d'une interface (245) utilisateur dudit système (205) de vision artificielle,
par laquelle un utilisateur (252) du système (205) de vision artificielle et en contrôle de ce qui est imagé peut obtenir une rétroaction par l'intermédiaire de l'interface (245) utilisateur sur l'échec.

5. Procédé tel que revendiqué dans l'une quelconque des revendications 1 à 4, dans lequel le procédé comprend en outre :
- le stockage (307) de ladite image (339b) intermédiaire annotée respective fournie en tant que l'image (336a) d'apprentissage annotée respective en mémoire pour une utilisation ultérieure ; et
- l'élimination (308) de toute image (339a) intermédiaire annotée restante non fournie en tant qu'une image (336) d'apprentissage annotée, par laquelle un espace de stockage mémoire peut être économisé..

6. Procédé tel que revendiqué dans l'une quelconque des revendications 2 à 5, dans lequel le procédé comprend en outre :
- l'entraînement (309) dudit algorithme de reconnaissance de contenu d'image pouvant être entraîné pour parvenir à une deuxième aptitude de reconnaissance de contenu en utilisant l'image (339b) intermédiaire annotée respective fournie en tant que l'image (336a) d'apprentissage annotée respective avec ses informations d'annotation associées.

7. Procédé tel que revendiqué dans la revendication 6, dans lequel ledit entraînement est réalisé en réponse à un échec dudit algorithme avec ladite première aptitude à reconnaître un contenu de l'image (339b) intermédiaire annotée respective conformément à ses informations (337) d'annotation associées.

8. Un ou plusieurs dispositifs (205 ; 230 ; 500) permettant de fournir une ou plusieurs images (336) d'apprentissage annotées destinées à être utilisées dans l'apprentissage d'un algorithme de reconnaissance de contenu d'image pouvant être entraîné d'un système (205) de vision artificielle, ledit système (205) de vision artificielle étant opérationnel, au moyen de l'algorithme de reconnaissance de contenu d'image pouvant être entraîné, pour reconnaître un contenu dans des images capturées par le système (205) de vision artificielle, dans lesquels ledit un ou lesdits plusieurs dispositifs sont configurés pour :
obtenir (301) des informations (337) d'annotation pour une ou plusieurs images (338) intermédiaires devant être capturées par le système (205) de vision artificielle, lesquelles informations (337) d'annotation indiquent des propriétés d'un contenu dans lesdites images (338) intermédiaires qui est un contenu pour une reconnaissance par l'algorithme de reconnaissance de contenu d'image pouvant être entraîné et dans lesquels lesdites propriétés sont telles que, si ledit algorithme était entraîné sur les images intermédiaires, l'apprentissage bénéficierait de la connaissance du fait que lesdites images intermédiaires contiennent un contenu avec lesdites propriétés, dans lesquels l'un ou les plusieurs dispositifs sont configurés pour obtenir les informations (337) d'annotation à l'avance avant que l'une ou les plusieurs images (338) intermédiaires auxquelles les informations d'annotation se rapportent ne soient capturées par le système (205) de vision artificielle ;
exploiter (302) le système (205) de vision artificielle de sorte que ladite une ou lesdites plusieurs images (338) intermédiaires soient capturées par le système (205) de vision artificielle conformément aux informations d'annotation obtenues ;
fournir (303) une ou plusieurs images (339) intermédiaires annotées qui correspondent à ladite une ou auxdites plusieurs images (338) intermédiaires capturées par le système (205) de vision artificielle avec une annotation conformément aux informations (337) d'annotation obtenues ; et
fournir (306) ladite une ou lesdites plusieurs images (336) d'apprentissage annotées sur la base d'au moins une desdites images (339) intermédiaires annotées.

9. Un ou plusieurs programmes (503) d'ordinateur comprenant des instructions qui, lorsqu'exécutées par un ou plusieurs processeurs, amènent ledit un ou lesdits plusieurs dispositifs (205 ; 230 ; 242 ; 500) selon la revendication 8 à réaliser le procédé selon l'une quelconque des revendications 1 à 7.

10. Un ou plusieurs supports comprenant l'un ou les plusieurs programmes (503) d'ordinateur selon la revendication 9, dans lesquels l'un ou les plusieurs supports sont un ou plusieurs des éléments suivants : signal électronique, signal optique, signal radio ou support (601) de stockage lisible par ordinateur.
